# FASCICULE DE BREVET EUROPEEN

(11) **EP 4 478 141 B1**
(45) Date de publication et mention de la délivrance du brevet: **10.06.2026**
(21) Numéro de dépôt: 24176204.6
(22) Date de dépôt: 16.05.2024
(51) Int. Cl.: G05B 19/4093, B25J 9/16

(54) **PROCEDE DE GENERATION D'UN PROGRAMME D'USINAGE A L'AIDE D'UN SYSTEME DE PROGRAMMATION**
VERFAHREN ZUR ERZEUGUNG EINES BEARBEITUNGSPROGRAMMS MIT EINEM PROGRAMMIERSYSTEM
METHOD FOR GENERATING A MACHINING PROGRAM USING A PROGRAMMING SYSTEM

(30) Priorité: 22.05.2023 FR 2305032
(43) Date de publication de la demande: 18.12.2024
(73) Titulaire: Ecole Nationale Supérieure d'Arts et Métiers (ENSAM), 75013 Paris (FR); AMVALOR, 75013 Paris (FR); Prodire, 57070 Metz (FR)
(72) Inventeur: BIGOT, Régis, 57070 Metz (FR); BAUDOUIN, Cyrille, 57070 Metz (FR); BOEHM, Daniel, 57070 Metz (FR); SCHUMAKER, Josselin, 57070 Metz (FR); CALLAIS, Etienne, 57070 Metz (FR)
(74) Mandataire: Cabinet Boettcher

(56) Documents cités:
- LEUTERT FLORIAN ET AL: "Projector-based Augmented Reality support for shop-floor programming of industrial robot milling operations", 2022 IEEE 17TH INTERNATIONAL CONFERENCE ON CONTROL & AUTOMATION (ICCA), IEEE, 27 June 2022 (2022-06-27), pages 418 - 423, XP034155004, DOI: 10.1109/ICCA54724.2022.9831840
- BUI MINH KHUONG ET AL: "Hybrid Object and Screen Stabilized Visualization Techniques for an AR Assembly Support System", INTERNET, 1 January 2017 (2017-01-01), XP093238819, Retrieved from the Internet <URL:https://www.jstage.jst.go.jp/article/tvrsj/22/2/22_167/_pdf/-char/ja>
- WANG KE ET AL: "A fast object registration method for augmented reality assembly with simultaneous determination of multiple 2D-3D correspondences", ROBOTICS AND COMPUTER INTEGRATED MANUFACTURING, ELSEVIER SCIENCE PUBLISHERS BV., BARKING, GB, vol. 63, 12 November 2019 (2019-11-12), XP086019188, ISSN: 0736-5845, [retrieved on 20191112], DOI: 10.1016/J.RCIM.2019.101890

## Description

La présente invention se rapporte au domaine des procédés de génération d'un programme d'usinage à l'aide d'un système de programmation.

Il est connu d'usiner des pièces à l'aide d'une machine-outil à commande numérique.

La machine-outil porte au moins un outil réel et le déplace par rapport à une pièce réelle à usiner en suivant des trajectoires au moins en partie définies dans un programme d'usinage préalablement généré.

Le programme d'usinage est généralement le même pour toutes les pièces d'une même série de pièces.

Toutefois, pour éviter des défauts d'usinage, il peut arriver que l'opérateur souhaite adapter le programme en fonction de spécificités observées sur une pièce à usiner.

Cette adaptation du programme d'usinage est particulièrement difficile à mettre en œuvre, consommatrice de temps et elle nécessite une grande expérience / technicité de l'opérateur et une parfaite maitrise de la machine-outil et des outils de programmation associés.

L'adaptation du programme d'usinage peut aussi conduire à des défauts d'usinage avec une nécessité de reprise d'usinage et/ou de mise au rebut des pièces défectueuses.

LEUTERT FLORIAN ET AL: "Projector-based Augmented Reality support for shop-floor programming of industrial robot milling operations" divulgue un procédé de programmation d'un robot utilisant une technique de réalité augmentée.

### OBJET DE L'INVENTION

Un objet de la présente invention est de fournir un procédé de génération d'un programme d'usinage à l'aide d'un système de programmation permettant de résoudre ou du moins atténuer tout ou partie des inconvénients précités de l'art antérieur.

### RESUME DE L'INVENTION

A cet effet, l'invention concerne un procédé selon la revendication 1.

Grâce au procédé selon l'invention, l'opérateur peut, sur une même image affichée sur la surface d'affichage, observer à la fois une représentation de la pièce réelle à usiner et un modèle virtuel prédéterminé correspondant à cette pièce réelle, c'est-à-dire une représentation virtuelle de la pièce virtuelle telle que générée par un programme de dessin assisté par ordinateur ou par une machine de scannage d'une pièce type déjà usinée ou à usiner (pièce brute).

Le modèle virtuel prédéterminé correspond à un fichier volumique comme un fichier de dessin en 3D.

Le modèle virtuel est utilisé pour définir les caractéristiques de la pièce réelle qui devront être obtenues après son usinage.

Ce modèle virtuel prédéterminé est défini par au moins un fichier informatique.

L'affichage du modèle virtuel prédéterminé montre les formes théoriques de la pièce réelle à obtenir après son usinage.

La représentation affichée de la pièce réelle à usiner représente la pièce dans son état avant usinage.

Par conséquent la représentation de la pièce réelle à usiner diffère du modèle virtuel prédéterminé au moins parce qu'elle peut contenir des formes réelles qui vont être modifiées par usinage pour tendre vers la forme du modèle virtuel prédéterminé.

Aux tolérances de fabrication / d'usinage près, la pièce réelle, après usinage (c'est-à-dire après exécution du programme d'usinage par la machine-outil), devra présenter des mêmes formes et dimensions que celles définies par le modèle virtuel prédéterminé.

Grâce au procédé selon l'invention, l'opérateur peut visualiser, sur une même image, la représentation de la pièce réelle à usiner et le modèle virtuel ce qui lui permet d'identifier des zones réelles de la pièce réelle à usiner qui correspondent respectivement à des zones virtuelles du modèle virtuel prédéterminé.

Grâce à cette image, l'opérateur a plus de facilité à identifier et sélectionner, au moins une zone virtuelle donnée du modèle virtuel qui correspond à une zone réelle de la pièce à usiner pour lui attribuer un paramètre d'intensité d'usinage souhaitée.

Le paramètre d'intensité d'usinage souhaitée sélectionné par l'opérateur est ainsi associé à la zone virtuelle sélectionnée du modèle virtuel qui correspond à une zone réelle à usiner de la pièce réelle à usiner.

En résumé, grâce à l'invention, l'opérateur visualisant l'image peut:
- observer la représentation de la pièce réelle avec la ou les zones réelles à usiner ; et
- apprécier l'état actuel de chacune des zones réelles de la pièce réelle à usiner pour estimer l'intensité de l'usinage à exécuter / appliquer pour certaines au moins des zones réelles données affichées ; puis
- sélectionner au moins une zone virtuelle correspondante du modèle virtuel pour attribuer à cette zone virtuelle un paramètre d'intensité d'usinage souhaitée pour la zone réelle à usiner correspondante.

Le paramètre d'intensité d'usinage souhaitée qui est associé à la zone virtuelle sélectionnée indique l'intensité d'usinage que l'opérateur souhaite appliquer sur la zone réelle correspondante de la pièce réelle représentée sur l'image.

L'interface de communication homme-machine permet de faciliter, zone par zone, le choix des paramètres d'intensité d'usinage à appliquer.

Une fois les sélections réalisées sur l'image affichée, le module de programmation génère le programme d'usinage adapté à être exécuté par la machine-outil (par exemple un robot) en prenant en compte le paramètre d'intensité d'usinage souhaitée qui a été sélectionné pour la zone virtuelle sélectionnée.

Le programme d'usinage ainsi généré contient une caractéristique d'intensité d'usinage à appliquer, avec un outil réel, sur la zone réelle à usiner de la pièce réelle.

Cette caractéristique d'intensité d'usinage contenue dans le programme d'usinage est représentative du paramètre d'intensité d'usinage préalablement sélectionné en utilisant l'image affichée.

Le procédé selon l'invention facilite la génération d'un programme d'usinage adapté à chaque pièce à usiner en prenant en compte les spécificités observées de la pièce réelle telles qu'elles apparaissent sur l'image affichée.

Le fait d'avoir, sur la même image, la pièce à usiner et le modèle virtuel permet de guider les sélections des paramètres d'intensité d'usinage et de directement attribuer le paramètre sélectionné à la bonne zone réelle.

Le risque d'erreur est ainsi minimisé.

Le programme d'usinage généré à l'aide du procédé selon l'invention est adapté aux spécificités de la pièce réelle à usiner.

Le besoin de reprise d'usinage et le risque de mise au rebut de la pièce usinée peut ainsi être minimisé tout en optimisant l'usinage.

Dans un mode de réalisation préférentiel du procédé selon l'invention, le module de programmation est agencé pour que le programme généré :
- commande l'usinage de plusieurs zones réelles distinctes de la pièce réelle qui correspondent chacune (deux à deux) à une des zones virtuelles d'une pluralité de zones virtuelles distinctes du modèle virtuel prédéterminé qui ont été sélectionnées (sur le modèle virtuel) avec chacune un paramètre d'intensité d'usinage associé ; et
- interdise l'usinage de zones réelles de la pièce réelle qui correspondent à des zones virtuelles du modèle virtuel prédéterminé non sélectionnées parmi la pluralité de zones virtuelles distinctes du modèle virtuel prédéterminé.

Avec ce mode de réalisation, chaque zone réelle de la pièce réelle correspondant à une zone virtuelle du modèle qui a été sélectionnée avec un paramètre d'intensité d'usinage peut être usinée et les autres zones réelles de la pièce réelle qui correspondent à des zones virtuelles du modèle qui n'ont pas été sélectionnées ne sont pas usinées.

Ainsi, le procédé selon l'invention permet à l'opérateur d'obtenir un programme d'usinage pour un usinage sélectif des zones réelles.

L'opérateur peut simplement exclure de l'usinage toutes les zones réelles qu'il ne souhaite pas usiner (chaque zone virtuelle non sélectionnée induit une exclusion d'usinage pour la zone réelle corresponde).

Le programme d'usinage est ainsi simplifié puisqu'il ne contient que les données relatives aux zones réelles à usiner.

Préférentiellement, la surface d'affichage sur laquelle est affichée l'image est une surface d'affichage d'une interface de réalité augmentée, l'interface de réalité augmentée superposant, dans l'image affichée, le modèle virtuel prédéterminé et la représentation de ladite au moins une pièce réelle à usiner.

Pour faciliter l'identification des correspondances entre zones réelles à usiner et zones virtuelles du modèle, il est préférable de superposer la représentation de la pièce réelle sur le modèle virtuel (l'alternative à ce mode de réalisation aurait été d'afficher, sur la même image, sans les superposer, la représentation de la pièce réelle à côté du modèle virtuel).

Dans un mode de réalisation particulier du précédent mode de réalisation, le modèle virtuel prédéterminé est affiché par projection, sur la surface d'affichage, d'un signal optique généré par au moins une source lumineuse commandée.

Par exemple, une source lumineuse commandée peut être :
- la source lumineuse d'un projecteur pour afficher l'image sur un écran de projection d'image ; ou
- une source lumineuse appartenant à un écran d'affichage comportant la surface d'affichage, comme c'est le cas d'un écran d'affichage à cristaux liquides, un écran à diodes électroluminescentes, un écran plasma, OLED ou autres types d'écrans incluant une source lumineuse.

Dans un mode de réalisation particulier, ladite au moins une représentation de la pièce réelle à usiner est affichée par projection, sur la surface d'affichage, d'un signal optique généré à partir d'une capture vidéo de la pièce réelle à usiner réalisée à l'aide d'au moins un capteur optique.

Ce signal optique généré à partir d'une capture vidéo de la pièce réelle à usiner est par exemple généré par ladite au moins une source lumineuse commandée ou par une source lumineuse commandée distincte de celle projetant le signal optique utilisé pour afficher le modèle virtuel prédéterminé.

Le capteur optique est par exemple un capteur d'une caméra qui peut être montée fixement par rapport à l'écran d'affichage ou qui peut être mobile pour être mobile indépendamment de l'écran d'affichage.

Dans le cas où le capteur optique est fixe par rapport à l'écran d'affichage, l'opérateur devra déplacer l'écran et le capteur optique par rapport à la pièce réelle pour générer la représentation souhaitée de la pièce sur l'écran.

Dans le cas où le capteur optique est mobile indépendamment de l'écran d'affichage, l'opérateur peut sans avoir à déplacer l'écran d'affichage, déplacer le capteur optique par rapport à la pièce réelle pour générer la représentation souhaitée de la pièce réelle sur l'écran.

Ce dernier mode de réalisation est utile pour représenter des zones difficiles à visualiser de la pièce réelle comme des zones réelles à usiner formées dans des alésages.

L'opérateur peut ainsi déplacer manuellement le capteur optique par rapport à la pièce réelle tout en observant un écran d'affichage qui reste fixe et sur lequel sont illustrées la représentation de la pièce à usiner et les zones virtuelles.

Dans un mode de réalisation particulier du procédé selon l'invention, la surface d'affichage est transparente et la représentation dans l'image de ladite au moins une pièce réelle à usiner résulte de l'observation de la pièce réelle à usiner au travers de la surface d'affichage transparente.

Ici la représentation de la pièce réelle à usiner est une observation de la pièce réelle au travers d'une surface d'affichage transparente ou semi-transparente (par exemple un verre optique d'un masque ou de lunettes portées par l'utilisateur).

Le modèle virtuel est lui-même affiché sur la surface d'affichage transparente pour être superposé en temps réel sur l'image de la pièce réelle.

Ce mode de réalisation nécessite de détecter la représentation de la pièce réelle visible sur la surface d'affichage (par exemple à l'aide d'un capteur optique d'une caméra) pour reconnaitre les zones affichées de la pièce réelle, leurs positions et orientations afin de superposer sur cette surface d'affichage la ou les zones virtuelles correspondantes du modèle virtuel.

Les zones virtuelles affichées sont ici respectivement superposées sur les zones réelles correspondantes dans l'image affichée.

Dans un mode de réalisation préférentiel du procédé selon l'invention, l'interface de communication homme-machine comporte une caméra et la pièce réelle est fixée sur un montage d'usinage, une pluralité de repères visuels réels étant formée sur l'un au moins parmi la pièce réelle et le montage d'usinage, le modèle virtuel comportant une pluralité de repères visuels virtuels, chaque repère visuel virtuel correspondant à l'un desdits repères visuels réels.

La superposition dans l'image du modèle virtuel prédéterminé sur la représentation de la pièce réelle à usiner est obtenue par reconnaissance dans des images générées par la caméra de certains au moins des repères visuels réels de la pluralité de repères visuels réels et par ajustement d'orientation et d'échelle de l'ensemble du modèle virtuel dans l'image pour que les repères visuels virtuels et les repères visuels réels qui se correspondent soient respectivement superposés dans l'image affichée sur la surface d'affichage.

Le montage d'usinage peut être fixe ou mobile (un montage d'usinage mobile comporte, par exemple, un plateau diviseur, un plateau rotatif, un système de transfert de pièce réelle, un robot portant la pièce réelle).

### BREVE DESCRIPTION DES DESSINS

D'autres caractéristiques et avantages de l'invention ressortiront clairement de la description qui en est faite ci-après, à titre indicatif et nullement limitatif, en référence aux dessins annexés, dans lesquels:
[Fig. 1] la figure 1 est une vue schématique du système de programmation 1 utilisé pour mettre en œuvre le procédé selon l'invention, le système de programmation 1 pouvant comporter ou non une machine-outil 50 agencée pour exécuter le programme d'usinage P et usiner la pièce réelle 4r ;
[Fig. 2] la figure 2 est un logigramme représentant un mode de réalisation du procédé de génération de programme d'usinage selon l'invention tels qu'adapté pour l'usinage de pièces réelles d'une série de pièces réelles d'un même type p.

### DESCRIPTION DETAILLEE DE L'INVENTION

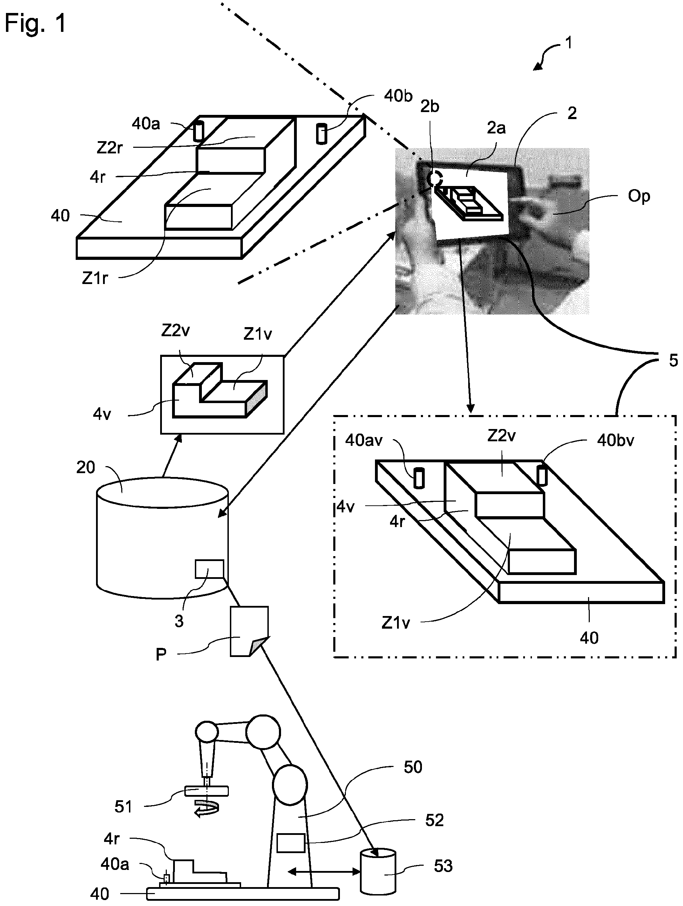

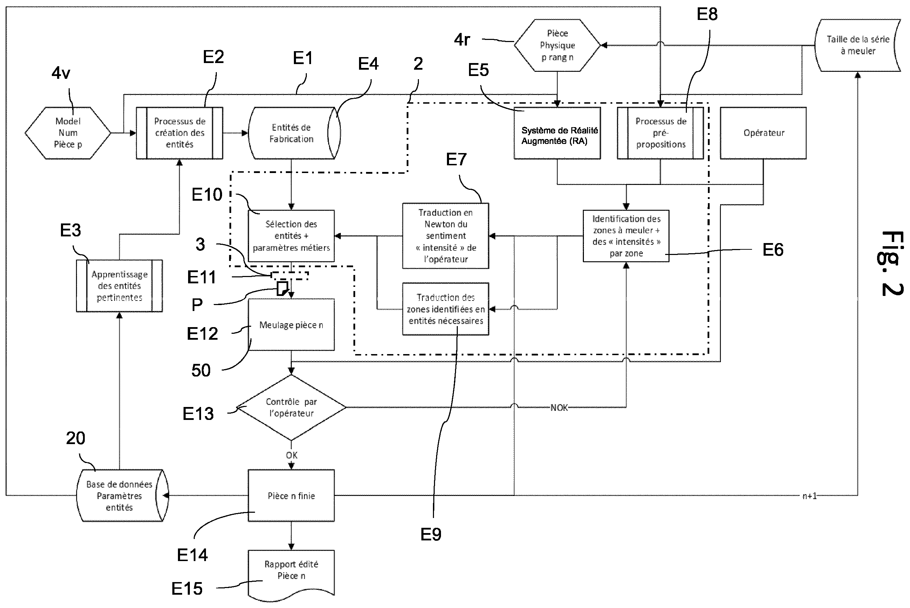

En référence aux figures 1 et 2, l'invention concerne essentiellement un procédé de génération d'un programme d'usinage P à l'aide d'un système de programmation 1.

Le système de programmation 1 illustré sur la figure 1 comporte une interface de communication homme-machine 2 et un module de programmation 3.

L'interface de communication homme-machine 2 comprend au moins une surface d'affichage 2a et des moyens de sélection.

En l'occurrence, la surface d'affichage 2a est un écran d'une tablette tactile équipée d'une caméra disposée pour permettre à un opérateur Op de capter l'image de la pièce réelle 4r / filmer la pièce réelle 4r pour obtenir une capture vidéo de la pièce 4r, tout en observant une image 5 sur l'écran 2a.

L'image 5 comprend la représentation de la pièce réelle 4r issue de la capture vidéo et le modèle virtuel 4v superposé sur la représentation de la pièce réelle 4r.

Dans ce mode de réalisation, les moyens de sélection de l'interface de communication 2 comprennent des capteurs de détection d'appui sur la surface d'affichage 2a de la tablette tactile.

Bien entendu, le système de programmation 1 pourrait comporter, en complément ou de manière alternative, d'autres types connus de la surface d'affichage 2a et/ou d'autres types connus de moyens de sélection.

Indépendamment de la nature de la surface d'affichage 2a et /ou des moyens de sélection choisis, le procédé selon l'invention comprend :
- l'affichage d'une image 5 sur la surface d'affichage 2a, cette image 5 illustrant préférentiellement de manière superposée, une représentation d'au moins une pièce réelle à usiner 4r et un modèle virtuel prédéterminé 4v correspondant à ladite au moins une pièce réelle à usiner 4r ; et
- la sélection dans l'image (par exemple une solution effectuée par un opérateur), à l'aide des moyens de sélection de l'interface de communication homme-machine 2, d'une part d'au moins une zone virtuelle donnée Z1v du modèle virtuel prédéterminé 4v correspondant à une zone réelle donnée de la pièce réelle à usiner et d'autre part d'un paramètre Px d'intensité d'usinage souhaitée / attendue (par l'opérateur) et associé à cette au moins une zone virtuelle sélectionnée ; puis
- la génération, par le module de programmation 3, du programme d'usinage P adapté à être exécuté par une machine-outil à commande numérique.

Le programme d'usinage P généré par le module de programmation 3 contient une caractéristique d'intensité d'usinage à appliquer, avec un outil réel 51 porté par la machine-outil 50, sur la zone réelle à usiner Z1r de la pièce réelle 4r, la caractéristique d'intensité d'usinage à appliquer étant fonction dudit paramètre d'intensité d'usinage Px sélectionné par l'opérateur.

Ainsi, le module de programmation 3 est agencé pour définir / déterminer / calculer la caractéristique d'intensité d'usinage présente dans le programme en fonction dudit paramètre d'intensité d'usinage Px sélectionné par l'opérateur.

Le procédé de génération de programme d'usinage est particulièrement adapté pour mettre en œuvre un usinage de type meulage ou ponçage ou surfaçage ou rodage de la pièce réelle puisque la qualité de l'état de surface à atteindre pour une zone réelle donnée est largement dépendante de l'état de surface de départ de la pièce à usiner et des intensités d'usinage appliqués respectivement appliqués zone par zone sur la pièce réelle.

L'état de surface de départ est facilement identifiable, zone par zone, par l'opérateur visualisant la pièce à usiner.

L'interface de communication homme-machine peut d'ailleurs être équipée de moyens d'assistance à la mesure de l'état de surface permettant à l'opérateur de mesurer les différents états de surface de départ en différentes zones de la pièce réelle pour apprécier le besoin d'usinage sur ces différentes zones réelles.

La représentation de la pièce réelle sur l'image permet de zoomer sur la pièce réelle pour par exemple faciliter l'évaluation de l'état de surface de départ de chaque zone réelle à usiner.

Le procédé est d'autant plus adapté à un usinage de type meulage ou ponçage ou surfaçage ou rodage que l'état de surface de départ des zones réelles à usiner est souvent variable d'une pièce à une autre augmentant dès lors l'intérêt d'adapter l'usinage appliqué en fonction des caractéristiques de la pièce réelle à usiner.

Par exemple une pièce à meuler sortant d'un moule peut avoir un état de surface de départ satisfaisant nécessitant une intensité d'usinage minimale ou un état de surface de départ particulièrement dégradé impliquant un besoin d'intensité d'usinage important pour atteindre un état de surface usiné conforme aux tolérances prédéfinies dans le modèle virtuel.

Le procédé selon l'invention est par conséquent particulièrement adapté au meulage ou ponçage ou surfaçage ou rodage car il permet un gain important dans l'attribution des intensités d'usinage adaptées aux différentes zones de la pièce, un gain de temps dans la génération du programme d'usinage adapté à la pièce réelle, un gain en qualité d'usinage et une optimisation de l'intensité de meulage ou ponçage ou surfaçage ou rodage à appliquer.

Dans le cas présent, l'interface de communication homme-machine comprend une surface d'affichage associée à des moyens de sélection de type capteurs d'appui sur l'écran. Ces capteurs d'appui permettent de détecter des appuis ou déplacements de doigts sur l'écran pour sélectionner des zones de l'image affichée pour, par exemple, sélectionner une zone virtuelle d'un modèle virtuel affiché sur l'écran 2a et sélectionner un paramètre d'intensité d'usinage, par exemple, via un menu affichant plusieurs paramètres disponibles à la sélection pour cette zone virtuelle sélectionnée.

L'interface de communication homme-machine 2 pourrait comporter tout autre moyen ou combinaison de moyens permettant d'interagir avec un opérateur pour lui permettre de sélectionner des zones virtuelles sur l'image et attribuer des paramètres à chacune de ces zones virtuelles.

Ainsi, l'interface de communication homme-machine 2 pourrait aussi comporter une commande vocale, un stylet de pointage et/ou tout autre dispositif de pointage informatique.

Quels que soient les moyens de sélection utilisés, la sélection d'une zone virtuelle peut recouvrir le cas où l'on sélectionne simplement une zone virtuelle prédéterminée du modèle virtuel ou le cas où l'on déciderait de dimensionner à l'aide de l'interface de communication la zone virtuelle que l'on souhaite sélectionner.

Les zones virtuelles sont matérialisées dans l'image par des codes de représentation graphique, comme une ligne de frontière périphérique propre à chaque zone virtuelle visible sur l'image.

Une zone virtuelle sélectionnée dans l'image pour lui attribuer une valeur de paramètre d'intensité d'usinage souhaitée peut y être, par exemple, identifiée par une mise en surbrillance de cette zone virtuelle sélectionnée.

Ce mode de représentation graphique permet d'identifier la ou les zones virtuelles sélectionnées dans l'image qui est/sont active(s) pour attribuer à chaque zone donnée le paramètre d'intensité d'usinage souhaitée associé.

La sélection du paramètre d'intensité d'usinage peut se faire via un menu contextuel appartenant aux moyens de sélection et qui s'affiche en réponse à la sélection de la ou des zone(s) virtuelle(s) donnée(s) et qui est actif pour la ou les seules zones virtuelles données sélectionnées.

Le menu contextuel peut par exemple présenter différentes valeurs disponibles du paramètre d'intensité sous la forme d'un menu déroulant, des cases à cocher, d'onglets à sélectionner, de valeurs à incrémenter ou décrémenter sur le menu ou tout autre moyen connu permettant de renseigner une valeur.

Une fois la sélection de la zone virtuelle et du paramètre d'intensité d'usinage souhaitée associé à cette au moins une zone virtuelle sélectionnée, l'interface de communication homme-machine 2 peut signaler sur l'image une représentation graphique particulière indiquant la valeur courante du paramètre d'intensité d'usinage sélectionnée pour chaque zone virtuelle donnée.

La valeur du paramètre d'intensité sélectionnée peut être symbolisée sous forme graphique par exemple via un code couleur, un code de densité de contraste, de densité de motif / texture, des caractères alphanumérique ou tout autre représentation graphique interprétable sur l'image pour distinguer entre elles différentes valeurs de paramètre d'intensité d'usinage.

L'opérateur a la possibilité de modifier la valeur du paramètre sélectionné sur le modèle virtuel en fonction de l'état des zones de la pièce réelle représentées sur l'image.

Préférentiellement, la surface d'affichage 2a sur laquelle est affichée l'image est une surface d'affichage d'une interface de réalité augmentée agencée pour superposer, dans l'image affichée 5, le modèle virtuel prédéterminé 4v et la représentation de ladite au moins une pièce réelle à usiner 4r.

Le modèle virtuel 4v peut être affiché par projection sur la surface d'affichage et il peut en être de même pour la représentation de la pièce réelle 4r.

Alternativement, dans le cas où la surface d'affichage serait transparente (comme c'est le cas pour certains modèles de lunettes à réalité augmentée), la représentation de la pièce virtuelle pourrait être une observation de la pièce réelle au travers de la surface transparente et le modèle virtuel 4v étant alors affiché sur la surface d'affichage 2a, par exemple par projection.

L'affichage du modèle virtuel 4v dans l'image 5 peut être réalisé de manière interactive, de manière que quel que soit l'angle d'observation de la pièce réelle, le modèle soit superposé sur la représentation de cette pièce réelle 4r avec un même angle d'observation et avec des dimensions ajustées pour que les limites des zones virtuelles du modèle virtuel soient surimposées sur les limites zones réelles à usinées correspondantes.

Préférentiellement, l'interface de communication homme-machine comporte une caméra 2b.

La caméra 2b et la surface d'affichage 2a sont préférentiellement fixées sur un support pour se déplacer ensemble avec le support, ce support pouvant être un élément d'une tablette numérique, d'un téléphone intelligent (smartphone) ou une monture d'un masque de réalité virtuelle.

Dans l'exemple particulier donné sur la figure 1, la caméra 2b est schématisée en traits pointillés et se trouve sur une face arrière opposée à l'écran 2a.

Toutefois, une telle caméra pourrait aussi être un dispositif déporté et mobile par rapport à l'écran 2a.

Dans des modes de réalisation particuliers, la pièce réelle 4r est fixée sur un montage d'usinage 40, une pluralité de repères visuels réels 40a, 40b étant formée sur l'un au moins parmi la pièce réelle 4r et le montage d'usinage 40.

Ces repères 40a, 40b peuvent être des pièces fixes (ici des plots ou des sphères) et/ou un tatouage et/ou une gravure et/ou une peinture et/ou des étiquettes comme des images uniques (une image unique est, par exemple, une image générée de manière aléatoire pour avoir un caractère unique) et/ou des codes-barres, et/ou des QR codes.

Ces repères sont préférentiellement fixés sur le montage d'usinage 40 ou éventuellement portés par la pièce réelle.

Le modèle virtuel 4v comporte une pluralité de repères visuels virtuels 40av, 40bv, chaque repère visuel virtuel correspondant à l'un desdits repères visuels réels 40a, 40b.

Dans ce mode de réalisation particulier, la superposition dans l'image du modèle virtuel prédéterminé 4v sur la représentation de la pièce réelle à usiner 4r est obtenue par reconnaissance dans des images générées par la caméra 2b, par un module de reconnaissance optique appartenant à l'interface de communication 2, de certains au moins des repères visuels réels 40a, 40b de la pluralité de repères visuels réels 40a, 40b et par ajustement d'orientation et d'échelle de l'ensemble du modèle virtuel dans l'image pour que les repères visuels virtuels 40av, 40bv et les repères visuels réels 40a, 40b qui se correspondent soient respectivement superposés dans l'image affichée 5 sur la surface d'affichage 2a.

Dans la mesure où l'interface de réalité augmentée comporte une caméra 2b, il est également possible de faire en sorte que l'interface de communication homme-machine 2 soit agencée pour réaliser la superposition, dans l'image affichée 5, du modèle virtuel prédéterminé 4v sur la représentation de la pièce réelle à usiner 4r par :
- identification (par reconnaissance optique à l'aide d'un module de reconnaissance optique appartenant à l'interface de communication 2), dans des images générées par la caméra 2b, de correspondances visuelles (comme des formes) entre des parties de la zone réelle donnée Z1r de la pièce à usiner 4r et des parties de la zone virtuelle donnée Z1v du modèle virtuel 4v correspondant ; et par
- superposition, dans l'image affichée 5, de limites périphériques de la zone réelle donnée Z1r sur des limites périphériques de la zone virtuelle donnée Z1v du modèle virtuel 4v.

En d'autres termes, l'interface de communication homme-machine 2, comprend ici une interface de réalité augmentée, qui adapte les dimensions et l'orientation d'observation du modèle virtuel affiché dans l'image 5 pour superposer les limites périphériques de la zone réelle donnée Z1r sur des limites périphériques de la zone virtuelle donnée Z1v du modèle virtuel 4r, les zones réelles de la pièce réelle 4r étant ainsi superposées sur les zones virtuelles correspondantes du modèle virtuel 4v.

Ainsi, l'image affichée 5 montre une représentation de la pièce réelle 4r et de la pièce virtuelle 4v avec une même échelle de taille et une même orientation d'observation.

Cette représentation, en réalité augmentée RA, facilite la sélection et l'attribution correcte des paramètres d'intensités d'usinage souhaitées respectivement associés aux zones virtuelles visibles dans l'image 5.

Comme indiqué précédemment, le module de programmation 3 génère le programme d'usinage P de manière que ce programme P contienne une caractéristique d'intensité d'usinage à appliquer sur la zone réelle à usiner de la pièce réelle 4r qui est fonction dudit paramètre d'intensité d'usinage sélectionné.

La caractéristique d'intensité d'usinage contenue dans le programme d'usinage P est choisie parmi un effort d'usinage à appliquer avec l'outil réel 51 contre la zone réelle à usiner, une durée d'usinage à appliquer avec l'outil réel 51 contre la zone réelle à usiner ou une combinaison dudit effort et de ladite durée.

Le système de programmation 1 comporte préférentiellement une base de données 20.

L'interface de communication homme-machine 2 est alors agencée pour renseigner dans la base de données 20, pour chaque au moins une zone virtuelle donnée Z1v du modèle virtuel 4v, une valeur préenregistrée de paramètre d'intensité d'usinage Px associée à cette zone virtuelle donnée Z1v du modèle virtuel 4v.

L'interface de communication homme-machine 2 est ici agencée pour :
- d'une part indiquer dans l'image affichée 5, ladite valeur préenregistrée du paramètre d'intensité d'usinage Px associée à cette zone virtuelle donnée Z1v ; et pour
- d'autre part, en réponse à la sélection dans l'image 5 du paramètre d'intensité d'usinage souhaitée Px associé à cette au moins une zone virtuelle sélectionnée, enregistrer dans la base de données 20 une nouvelle valeur du paramètre d'intensité d'usinage Px associée à cette zone virtuelle donnée Z1v.

De cette manière, la sélection du paramètre d'intensité d'usinage souhaité Px associé à une zone virtuelle donnée Z1v du modèle virtuel 4v est facilitée puisqu'une proposition de valeur préenregistrée du paramètre d'intensité d'usinage Px est identifiée dans la base 20 et affichée sur l'image 5.

L'opérateur est libre de sélectionner la valeur proposée sur l'image 5 ou au contraire de changer de valeur pour une valeur supposée mieux adaptée.

Comme chaque valeur sélectionnée par l'opérateur est enregistrée dans la base de données 20, la base constitue un historique des sélections réalisées pour chacune des zones virtuelles du modèle virtuel.

Comme cela sera explicité par la suite, une telle base de données 20 est utilisable pour calculer une valeur adaptée du paramètre d'intensité d'usinage Px associée à chaque zone réelle d'une pièce à usiner.

Ce calcul de la valeur adaptée du paramètre prend préférentiellement en compte les sélections successivement opérées par l'opérateur pour les précédents usinages d'une ou plusieurs pièces 4r et pour chacune des zones virtuelles du modèle virtuel associé.

Ainsi, une telle base de données 20 est favorable à une amélioration de la qualité des programmes d'usinage successivement générés et à la qualité des usinages successifs.

La base de données 20 peut ainsi contenir pour chaque zone virtuelle donnée du modèle virtuel 4v, une valeur courante associée à cette zone virtuelle donnée qui est réactualisée en fonction de chaque sélection effectuée par l'opérateur pour générer un nouveau programme d'usinage P et/ou en fonction d'observations (faites par un traitement automatisé ou par une intervention de l'opérateur) réalisées sur l'état de la pièce à usiner.

Ceci permet une amélioration continue de la qualité des programmes d'usinage et une amélioration continue de la qualité des usinages qui en découlent.

Plus particulièrement, comme on le comprend de la figure 1, le modèle virtuel 4v comporte plusieurs zones virtuelles Z1v, Z2v distinctes les unes des autres.

Ces zones virtuelles sont ici prédéterminées dans le modèle mais des zones virtuelles peuvent aussi être intégrées dans le modèle à la demande de l'opérateur.

Par exemple, si l'opérateur Op constate un point de défaut à usiner sur la pièce réelle, il peut alors délimiter une zone virtuelle correspondante et l'intégrer dans le modèle 4v.

Le système de programmation 1 est adapté à :
- superposer, dans l'image affichée 5 et sur la représentation de la pièce réelle à usiner 4r, chacune des zones virtuelles données Z1v, Z2v du modèle virtuel 4v qui correspondent respectivement à des zones réelles données Z1r, Z2r de la pièce réelle à usiner 4r ; et à
- indiquer (sur l'image 5) des valeurs préenregistrées dans la base de données 20 des paramètres d'intensité d'usinage Px respectivement associées à chacune de ces zones virtuelles données affichées Z1v, Z2v.

L'opérateur peut ainsi sélectionner pour chaque zone virtuelle, la valeur correspondante proposée / affichée dans l'image 5 ou alternativement sélectionner une autre valeur.

Dans certains cas particuliers, la machine-outil 50 peut porter une pluralité d'outils réels 51 chacun adapté à réaliser une opération d'usinage associée à une même zone virtuelle donnée du modèle virtuel.

Ces outils peuvent par exemple être stockés dans un magasin d'outils réels appartenant à la machine-outil.

La valeur préenregistrée de paramètre d'intensité d'usinage associée à ladite au moins une zone virtuelle donnée du modèle virtuel est alors également associée à un outil réel donné 51 de ladite pluralité d'outils réels de manière que la valeur préenregistrée d'intensité d'usinage soit valable pour un couple constitué de ladite au moins une zone virtuelle donnée Z1v du modèle virtuel 4v et de l'un des outils réels 51 portés par la machine-outil 50.

Ainsi, la base de données 20 peut contenir pour une même zone virtuelle donnée Z1v du modèle virtuel 4v :
- une première valeur préenregistrée d'intensité d'usinage Px propre à l'un des outils réels 51 portés par la machine-outil 50 ; et
- une seconde valeur préenregistrée d'intensité d'usinage Px propre à un autre desdits outils réels portés par la machine-outil 50.

Dans ce mode de réalisation, la machine-outil 50 peut par exemple porter plusieurs fraises ou tête abrasives ou plusieurs meules 51 ayant chacune un grain propre et un niveau d'usure propre.

Ces outils réels 51 de la pluralité **d'outils** sont individuellement adaptés à réaliser un usinage particulier sur une zone réelle particulière de la pièce réelle mais avec des résultats **d'usinage** probablement différents en fonction de l'outil réel sélectionné / utilisé.

L'opérateur Op a dès lors la possibilité de choisir lequel de ces outils réels parmi la pluralité d'outils doit être sélectionné pour réaliser l'usinage particulier de la zone réelle de la pièce 4r.

Dans ce mode de réalisation particulier, le paramètre d'intensité d'usinage proposé à la sélection pour générer le programme d'usinage présente une valeur définie en fonction d'une part de la zone virtuelle donnée du modèle virtuel et d'autre part de l'outil réel sélectionné pour réaliser l'usinage.

Ainsi, la valeur du paramètre d'intensité d'usinage proposée pour la sélection pourra évoluer en fonction de la nature de l'outil réel choisi et en fonction du niveau d'usure de cet outil réel.

Au cours des usinages successifs effectués avec un même outil réel, la sélection du paramètre d'intensité évoluera en fonction des observations de l'usinage obtenu.

Grâce aux enregistrements des sélections successives dans la base de données 20, l'usure de l'outil réel est indirectement prise en compte dans l'évolution du choix du paramètre d'intensité d'usinage à appliquer.

Par exemple, lorsque l'opérateur constate que l'usinage réalisé est insatisfaisant du fait de l'usure de l'outil, il peut choisir de sélectionner une valeur de paramètre d'intensité d'usinage souhaitée qui est augmentée.

La caractéristique d'intensité d'usinage dans le programme d'usinage est alors augmentée en fonction de la valeur du nouveau paramètre d'intensité d'usinage sélectionné par l'opérateur et l'usinage réalisé par la machine-outil aura une intensité augmentée sur la zone réelle correspondante de la pièce (en effort augmenté et/ou en durée d'usinage augmentée).

La valeur augmentée étant mémorisée dans la base de données, cette valeur augmentée pourra dès lors être proposée à la sélection pour générer un nouveau programme d'usinage pour usiner une nouvelle pièce réelle.

Autrement dit, dans le cas où l'usinage consiste à meuler une zone réelle d'un pièce réelle, l'opérateur pourra sélectionner un outil réel porté par la machine pour réaliser cette opération de meulage et l'interface de communication homme-machine proposera alors à l'opérateur une valeur préenregistrée du paramètre d'intensité d'usinage associée à la zone virtuelle correspondante du modèle virtuel et à l'outil de meulage sélectionné par l'opérateur.

Grâce à l'historique mémorisant l'évolution du paramètre d'intensité en fonction du temps d'usage d'un outil, il est possible de faire en sorte que le paramètre proposé évolue en fonction du temps d'usage de l'outil en prenant en compte les évolutions constatées du paramètre pour un autre outil utilisé pour des usinages antérieurs.

Dans un mode de réalisation particulier, on peut chercher à utiliser les données contenues dans la base de données 20 pour calculer une valeur adaptée du paramètre d'intensité d'usinage que l'opérateur peut choisir ou non comme paramètre d'intensité d'usinage Px sélectionné pour une zone donnée de la pièce à usiner.

A cette fin, le système de programmation 1 utilisé pour la mise en œuvre du procédé selon l'invention est agencé ;
- pour mémoriser dans la base de données 20, un historique des sélections successives effectuées pour générer, avec le module de programmation 3, des programmes d'usinage successifs de pièces réelles 4r successivement usinées avec la machine-outil 50 ; et
- pour calculer des valeurs adaptées de paramètres d'intensité d'usinage Px, chacune de ces valeurs adaptées étant associée à une zone virtuelle donnée du modèle virtuel qui lui correspond, chacune de ces valeurs adaptées étant calculée par le système de programmation 1 en fonction de l'historique des sélections.

Cet historique regroupe des sélections réalisées pour des pièces 4r d'une même série de pièces et éventuellement d'une autre série de pièces préalablement usinées avec la machine-outil 50.

Ainsi, le système de programmation permet une adaptation du paramètre d'intensité d'usinage Px proposé pour la génération d'un programme P en fonction de sélections passées réalisées pour générer des programmes d'usinage P de pièces 4r d'une même série de pièces ou éventuellement d'autres séries.

Chaque valeur calculée est proposée à l'opérateur pour l'usinage d'une zone réelle donnée d'une pièce 4r à usiner.

A nouveau, l'opérateur est libre de sélectionner la valeur calculée proposée ou au contraire de sélectionner une autre valeur qui lui semblerait plus adaptée.

De cette manière, le procédé selon l'invention permet une amélioration continue de la qualité de l'usinage, y compris au cours de l'usinage d'une série de pièce.

La capacité d'amélioration de la qualité de programmation est augmentée avec la taille de la série de pièces.

Le calcul des valeurs adaptées de paramètres d'intensité d'usinage en fonction de l'historique est par exemple effectué par un réseau de neurones artificiels mis en œuvre par un module de calcul appartenant au système de programmation 1.

Ce réseau de neurones est éventuellement optimisé par des méthodes d'apprentissage de type probabiliste basées sur l'historique enregistré dans la base de données 20.

Le système d'usinage 1 comprend ainsi une capacité d'apprentissage en fonction des usinages passés et des sélections successives réalisés par l'opérateur suivant le procédé de l'invention.

Selon ce mode de réalisation du procédé, le système de programmation 1 peut être agencé pour que le calcul de chaque valeur adaptée de paramètre d'intensité d'usinage Px associée à une zone virtuelle donnée Z1v du modèle virtuel soit effectué en fonction de données issues d'une capture d'image de la zone réelle correspondante de la pièce à usiner.

Ainsi, chaque valeur adaptée de paramètre d'intensité d'usinage associée à une zone réelle à usiner d'une pièce réelle peut être calculée en fonction d'une analyse d'une ou plusieurs captures d'images de la pièce P à usiner.

Selon un mode de réalisation complémentaire du précédent, le système de programmation 1 peut être agencé pour que le calcul de chaque valeur adaptée de paramètre d'intensité d'usinage Px associée à une zone virtuelle donnée Z1v du modèle virtuel 4v soit effectué en fonction de données issues de captures d'images de zones réelles de pièces préalablement usinées par la machine-outil 50 qui correspondent à cette même zone virtuelle donnée Z1v.

Ainsi, les captures d'image et/ou les données issues de ces captures d'image de zones réelles données de pièces réelles qui correspondent à une même zone virtuelle donnée du modèle virtuel 4v sont chacune mémorisées dans la base de données 20 avec la valeur correspondante du paramètre d'intensité d'usinage Px qui a été sélectionnée pour la zone réelle donnée.

La comparaison des données issues des captures d'images d'une pièce à usiner avec des données de captures d'image de pièces réelles pour lesquelles les valeurs respectives d'intensités d'usinage ont été sélectionnées permet d'améliorer la précision du calcul la valeur adaptée pour une zone réelle à usiner.

Avec ce mode de réalisation, la valeur adaptée est calculée en prenant en compte les caractéristiques de la zone réelle à usiner et l'historique des sélections préalablement réalisées.

C'est cette valeur adaptée, plus juste / précise, qui est proposée à la sélection par l'opérateur.

L'opération de sélection est ainsi facilitée puisque la valeur proposée est de plus en plus juste avec l'accroissement progressif du volume de données contenues dans la base de données 20.

Par exemple, si le système de programmation 1 constate que la zone réelle à usiner de la pièce à usiner comporte des caractéristiques surfaciques observables sur la capture d'image qui sont comparables à des caractéristiques surfaciques préalablement observées sur d'autres captures d'images d'autres pièces réelles, alors le système 1 calculera et proposera une valeur calculée de paramètre Px en prenant en compte les paramètres Px sélectionnés pour ces autres pièces Px ayant ces caractéristiques surfaciques comparables.

Plus la base de données 20 est enrichie par des données d'usinage et par des sélections effectuées par l'opérateur et plus la proposition de paramètre Px sera pertinente.

A terme, la base de données 20 est suffisamment enrichie pour que les propositions de valeurs adaptées par le système de programmation 1 soient systématiquement pertinentes / justes et soient systématiquement sélectionnée par l'opérateur.

L'opérateur peut alors choisir d'actionner, via l'interface de communication homme-machine 2, une fonction de sélection automatique du paramètre d'usinage Px telle que le paramètre d'intensité d'usinage sélectionné pour la génération du programme d'usinage P soit égal à la valeur adaptée de paramètre d'intensité d'usinage calculée par le système de programmation.

Selon ce mode de réalisation, l'interface de communication homme-machine 2 est fonctionnellement reliée à une instrumentation de mesure 52 équipant la machine-outil 50.

L'instrumentation de mesure 52 est alors agencée pour mesurer dans le temps, lors de l'usinage de la pièce réelle 4r, une variation des efforts appliqués par l'outil réel 51 sur la zone réelle Z1r de la pièce réelle 4r.

Dès lors, le procédé pourra comprendre la vérification que les efforts appliqués sur la zone réelle Z1r de la pièce réelle 4r pendant l'usinage de la pièce réelle sont bien égaux, à une valeur de tolérance prédéfinie près, à ladite caractéristique d'intensité d'usinage à appliquer.

Préférentiellement, l'interface de communication 2 est agencée pour enregistrer dans la base de données 20, des données représentatives des mesures de variation d'effort délivrées par l'instrumentation de mesure 52.

Ces données représentatives des mesures, peuvent avoir une utilité pour établir un indicateur de taux d'usure de l'outil réel ou d'efficacité d'usinage par rapport aux efforts appliqués sur la pièce à l'aide de l'outil réel.

La figure 2 illustre un exemple de mise en œuvre du procédé selon l'invention dans le cas où l'on souhaite usiner plusieurs pièces réelles 4r appartenant à une série de n pièces réelles d'un même type p qui correspond au modèle virtuel 4v commun aux pièces de type p.

Chaque pièce réelle 4r donnée du type p est individuellement identifiée par un numéro de rang n qui lui est propre et qui est unique dans la série.

Le modèle virtuel 4v est identifié par le terme « Model Num Pièce p ».

Selon le procédé de l'invention, une première partie préparatoire peut être mise en œuvre comme illustré sur cette figure 2.

Cette partie préparatoire consiste à proposer pour le modèle virtuel 4v de pièce de type p, des trajectoires d'usinage théoriques chacune définie en utilisant une « entité de fabrication » donnée.

Une entité de fabrication est composée d'une géométrie virtuelle d'une partie de pièce à usiner, c'est-à-dire une zone virtuelle à usiner, d'un outil virtuel pour réaliser cet usinage (ici un outil de meulage ou un outil de ponçage) et d'un ensemble de conditions de coupe/abrasion associées à cet outil donné (vitesse d'avance, vitesse de coupe, effort à appliquer).

Ainsi, une trajectoire peut être définie pour chaque zone virtuelle du modèle, la trajectoire pouvant évoluer en fonction de modifications de la taille ou de la forme de la zone virtuelle.

Pour éviter les collisions ou trajectoires impossibles et optimiser les trajectoires, chaque trajectoire est préférentiellement définie au sein d'une maquette numérique qui représente :
- la machine-outil (ici un robot 50, par exemple un robot 5 ou 6 axes) avec ses différents constituants et aptitudes de déplacement ;
- les positionneurs, bridages, déflecteurs et autres éléments représentatifs de l'environnement d'usinage réel.

La maquette numérique permet de représenter l'environnement d'usinage pour s'assurer de la faisabilité des différentes trajectoires.

Ces entités de fabrication et trajectoires sont par exemple créées par un « processus de création des entités » E2 qui peut être automatisé et/ou supervisé par l'opérateur au moyen de l'interface de communication homme-machine 2.

Préférentiellement, cette étape de « processus de création des entités » E2 est optimisée en utilisant un outil d'apprentissage nommé « apprentissage des entités pertinentes » E3.

Ce processus « apprentissage des entités pertinentes » E3 peut par exemple observer les choix opérés par l'opérateur lors de la création des entités de fabrication et peut les mémoriser dans la base de données 20, avec les paramètres de ces entités de fabrication E2.

Les entités de fabrication ainsi définies sont enregistrées à l'étape E4, chacune de ces entités de fabrication définissant au moins une zone virtuelle donnée du modèle virtuel prédéterminé 4v et une trajectoire de déplacement d'un outil donné qui est associée à cette au moins une zone virtuelle.

Une fois que cette première partie préparatoire a été réalisée pour définir les entités de fabrication propres au modèle virtuel, l'essentiel des zones virtuelles du modèle virtuel prédéterminé 4v sont alors déterminées avec une trajectoire théorique de déplacement de l'outil propre à chacune de ces zones virtuelles.

Il est dès lors, possible de mettre en œuvre les étapes de sélection des zones virtuelles et des paramètres Px d'intensité d'usinage du procédé selon l'invention de manière à générer le programme d'usinage P spécifiquement adapté à l'usinage d'une pièce réelle 4r de type p.

Dans l'exemple de la figure 2, le programme d'usinage P est destiné à usiner, en l'occurrence meuler, la pièce réelle 4r de rang n de la série de pièces de type p.

Une étape E1 consiste à vérifier que la pièce 4r de rang n (notée « pièce physique p rang n ») est bien du même type p que le modèle virtuel 4v.

Une étape E5 consiste à afficher le modèle virtuel 4v sur la surface d'affichage 2b où est également représentée la pièce réelle 4r.

Comme indiqué précédemment, le modèle virtuel 4v et la représentation de la pièce réelle 4r sont préférentiellement superposés dans l'image (voir par exemple la représentation encadrée en traits mixtes sur la figure 1).

Préférentiellement, l'image est affichée en réalité augmentée de manière que le modèle affiché suive les déplacements dans l'image de la pièce réelle 4r représentée pour donner l'illusion à l'utilisateur que le modèle virtuel ne forme qu'un même objet avec la représentation de la pièce réelle.

Cette étape E5 est nommée « Système RA » pour affichage de l'image sur le système de Réalité Augmentée.

Comme la pièce réelle est représentée sur l'image avec le modèle virtuel et les différentes zones virtuelles Z1v, Z2v, l'opérateur peut alors :
- identifier visuellement les zones de la pièce réelle qu'il veut usiner, en l'occurrence meuler ; et
- décider de l'intensité de l'usinage qu'il souhaite appliquer à chaque zone réelle.

Cette étape E6 d'identification des zones réelles est notée « Identification des zones à meuler + des entités par zone ».

Lors de cette étape E6, l'opérateur sélectionne, l'une après l'autre, les zones virtuelles du modèle virtuel qui correspondent à des zones réelles à usiner et sélectionne pour chaque zone virtuelle sélectionnée un paramètre Px d'intensité d'usinage souhaité associé.

Cette étape E6 de sélection de chacune des zones virtuelles avec les paramètres affichés Px associés est ici facilitée en affichant une proposition de paramètre d'intensité Px par zone virtuelle visible dans l'image.

Les valeurs proposées de paramètre Px sont ici générées à l'étape E8 nommée « Processus de pré-propositions ».

Comme indiqué précédemment, une valeur proposée de paramètre Px pour une zone virtuelle donnée peut-être :
- une valeur préenregistrée de paramètre d'intensité d'usinage Px qui a été préenregistrée dans la base de données 20 en association à cette zone virtuelle donnée et éventuellement associée à l'outil réel que l'on veut utiliser pour l'usinage correspondant à cette zone virtuelle donnée ; et/ou
- une valeur adaptée de paramètre d'intensité d'usinage Px calculée par le système de programmation 1 en fonction de l'historique de sélections.

Comme indiqué précédemment, une valeur adaptée de paramètre proposé peut être calculée par le système de programmation en fonction de données issues d'une ou plusieurs captures d'image de la pièce à usiner.

L'opérateur pourra ainsi, sélectionner la valeur proposée du paramètre Px ou sélectionner une autre valeur de paramètre Px qui lui semblerait mieux adaptée au cas d'espèce.

A l'étape E7, chaque paramètre d'intensité Px sélectionné pour une zone virtuelle sélectionnée est traduit / converti en une caractéristique d'intensité d'usinage à appliquer sur la zone réelle correspondante de la pièce n.

La caractéristique d'intensité est un effort d'usinage à appliquer avec l'outil réel exprimé en Newton et/ou en temps d'application de l'effort et/ou en vitesse de déplacement de l'outil et/ou en vitesse de rotation ou d'oscillation de l'outil.

Cette étape E7 de traduction de chaque paramètre d'intensité Px sélectionné en caractéristique d'intensité est nommée « traduction en Newton du sentiment « intensité » de l'opérateur ».

Les zones virtuelles peuvent être prédéfinies dans le modèle virtuel et/ou être définies dimensionnées dans le modèle virtuel par l'opérateur à l'aide des moyens de sélection.

Par exemple, si l'opérateur constate un défaut localisé en un point de la représentation de la pièce réelle dans l'image, il peut alors directement sélectionner sur le modèle virtuel affiché, une nouvelle zone virtuelle contenant ce défaut.

La sélection de zones virtuelles et l'éventuel dimensionnement / redimensionnement des zones virtuelles sont réalisés à l'étape E6.

A l'étape E9, chaque zone virtuelle définie / sélectionnée dans l'image est intégrée dans le modèle virtuel sous forme d'entité éventuellement associé à un outil adapté pour usiner la zone réelle correspondante sur la pièce réelle.

Cette étape E9 d'intégration des zones virtuelles éventuellement redimensionnée est nommée « traduction des zones identifiées en entités nécessaires ».

Une fois que les sélections individuelles des zones virtuelles et des paramètres Px correspondants ont été réalisés, ces sélections individuelles sont intégrées en un seul ensemble de données comprenant le modèle virtuel et les entités de fabrication.

Cette intégration en un ensemble de données est réalisée à l'étape E10 nommée « Sélection des entités + paramètres métiers ».

Le module de programmation 3 peut alors recevoir cet ensemble de données et générer un programme d'usinage P spécifiquement adapté à la pièce réelle 4r de rang n et de type p.

La génération du programme P est réalisée à l'étape E11.

Le programme est alors envoyé vers une unité de commande 53 de la machine-outil 50 pour y être exécuté afin de meuler / poncer la pièce réelle n.

Cet usinage est réalisé à l'étape E12 nommée « meulage pièce n ».

A l'issue de l'usinage de la pièce n, l'opérateur effectue un contrôle de la pièce pour savoir si elle est ou non conforme à ses attentes.

Cette opération de contrôle peut être réalisée directement sur la pièce avec des outils de contrôle et/ou à l'aide de l'interface de communication homme-machine 2.

Cette opération de contrôle est réalisée à l'étape E13 nommée « contrôle par l'opérateur ».

Si la pièce est conforme aux attentes de l'opérateur (OK), alors la pièce n est considérée comme finie (étape E14 nommée « pièce n finie ») et un rapport d'usinage de la pièce n peut être généré à l'étape E15 nommée « rapport édité pièce n ».

La base de données 20 est alors enrichie des informations de sélection effectuées par l'opérateur et de l'information indiquant que ces informations étaient pertinentes et ont conduit à une pièce usinée n satisfaisante.

L'opérateur peut alors recommencer les opérations pour une nouvelle pièce n+1 de la série de pièce à meuler de type p.

Cette série présente un nombre de pièces à usiner nommée « taille de la série à meuler ».

Dans le cas où lors du contrôle réalisé par l'opérateur à l'étape E13, l'opérateur considèrerait que la pièce usinée n n'est pas conforme à ses attentes (NOK), il peut alors recommencer l'étape E6 pour sélectionner une nouvelle zone virtuelle de la pièce n qu'il souhaiterait ré-usiner avec un nouveau paramètre d'intensité Px.

## Revendications

1. Procédé de génération d'un programme d'usinage (P) à l'aide d'un système de programmation (1), le système de programmation (1) comprenant une interface de communication homme-machine (2) et un module de programmation (3), l'interface de communication homme-machine (2) comprenant au moins une surface d'affichage (2a) et des moyens de sélection, le procédé comprenant
- l'affichage sur la surface d'affichage (2a) d'une image (5) illustrant une représentation d'au moins une pièce réelle à usiner (4r) et un modèle virtuel prédéterminé (4v) correspondant à ladite au moins une pièce réelle à usiner (4r) et définissant les caractéristiques de la pièce réelle qui devront être obtenues après son usinage ;
- la sélection dans l'image, à l'aide des moyens de sélection de l'interface de communication homme-machine, d'une part d'au moins une zone virtuelle donnée (Z1v) du modèle virtuel prédéterminé (4v) correspondant à une zone réelle donnée (Z1r) de la pièce réelle à usiner (4r) et d'autre part d'un paramètre (Px) d'intensité d'usinage souhaitée associé à cette au moins une zone virtuelle sélectionnée ; puis
- la génération, par le module de programmation (3), du programme d'usinage (P) adapté à être exécuté par une machine-outil à commande numérique (50), ledit programme d'usinage contenant une caractéristique d'intensité d'usinage à appliquer, avec un outil réel (51) porté par la machine-outil (50), sur la zone réelle à usiner de la pièce réelle, la caractéristique d'intensité d'usinage à appliquer étant fonction dudit paramètre d'intensité d'usinage sélectionné et choisie parmi un effort d'usinage à appliquer avec l'outil réel contre la zone réelle à usiner, une durée d'usinage à appliquer avec l'outil réel contre la zone réelle à usiner ou une combinaison dudit effort et de ladite durée.

2. Procédé de génération d'un programme d'usinage selon la revendication 1, dans lequel ladite surface d'affichage (2a) sur laquelle est affichée l'image est une surface d'affichage d'une interface de réalité augmentée, l'interface de réalité augmentée superposant, dans l'image affichée, le modèle virtuel prédéterminé et la représentation de ladite au moins une pièce réelle à usiner.

3. Procédé de génération d'un programme d'usinage selon la revendication 2, dans lequel le modèle virtuel prédéterminé est affiché par projection, sur la surface d'affichage, d'un signal optique généré par au moins une source lumineuse commandée.

4. Procédé de génération d'un programme d'usinage selon la revendication 3, dans lequel la représentation de ladite au moins une pièce réelle à usiner est affichée par projection, sur la surface d'affichage, d'un signal optique généré à partir d'une capture vidéo de la pièce réelle à usiner réalisée à l'aide d'au moins un capteur optique.

5. Procédé de génération d'un programme d'usinage selon l'une quelconque des revendications 2 ou 3, dans lequel ladite surface d'affichage est transparente, la représentation de ladite au moins une pièce réelle à usiner dans l'image résultant de l'observation de la pièce réelle à usiner au travers de la surface d'affichage transparente.

6. Procédé de génération d'un programme d'usinage selon l'une quelconque des revendications 2 à 5, dans lequel l'interface de communication homme-machine (2) comporte une caméra (2b) et la pièce réelle (4r) est fixée sur un montage d'usinage (40), une pluralité de repères visuels réels (40a, 40b) étant formée sur l'un au moins parmi la pièce réelle (4r) et le montage d'usinage (40), le modèle virtuel comportant une pluralité de repères visuels virtuels (40av, 40bv), chaque repère visuel virtuel correspondant à l'un desdits repères visuels réels, la superposition dans l'image du modèle virtuel prédéterminé (4v) sur la représentation de la pièce réelle à usiner (4r) étant obtenue par reconnaissance dans des images générées par la caméra (2b) de certains au moins des repères visuels réels de la pluralité de repères visuels réels (40a, 40b) et par ajustement d'orientation et d'échelle de l'ensemble du modèle virtuel (4r) dans l'image (5) pour que les repères visuels virtuels (40av, 40bv) et les repères visuels réels (40a, 40b) qui se correspondent soient respectivement superposés dans l'image affichée (5) sur la surface d'affichage (2a).

7. Procédé de génération d'un programme d'usinage selon l'une quelconque des revendications 2 à 5, dans lequel l'interface de réalité augmentée comporte une caméra (2b), l'interface de communication homme-machine (2) étant agencée pour réaliser la superposition, dans l'image affichée (5), du modèle virtuel prédéterminé (4v) sur la représentation de la pièce réelle à usiner (4r) par :
- identification, dans des images générées par la caméra (2b), de correspondances visuelles entre des parties de la zone réelle donnée (Z1r) de la pièce à usiner (4r) et des parties de la zone virtuelle donnée (Z1v) du modèle virtuel correspondant (4v) ; et par
- superposition, dans l'image affichée (5), de limites périphériques de la zone réelle donnée (Z1r) sur des limites périphériques de la zone virtuelle donnée (Z1v) du modèle virtuel (4v).

8. Procédé selon l'une quelconque des revendications 1 à 7, dans lequel le système de programmation comporte une base de données (20), l'interface de communication homme-machine (2) étant agencée pour renseigner dans la base de données (20), pour chaque au moins une zone virtuelle donnée (Z1v) du modèle virtuel (4v), une valeur préenregistrée de paramètre d'intensité d'usinage (Px) associée à cette zone virtuelle donnée (Z1v) du modèle virtuel, l'interface de communication homme-machine (2) étant agencée pour :
- d'une part indiquer dans l'image affichée (5), ladite valeur préenregistrée du paramètre d'intensité d'usinage (Px) associée à cette zone virtuelle donnée (Z1v) ; et pour
- d'autre part, en réponse à la sélection dans l'image (5) du paramètre d'intensité d'usinage souhaitée (Px) associé à cette au moins une zone virtuelle sélectionnée, enregistrer dans la base de données (20) une nouvelle valeur du paramètre d'intensité d'usinage (Px) associée à cette zone virtuelle donnée (Z1v).

9. Procédé selon la revendication 8, dans lequel la machine-outil (50) porte une pluralité d'outils réels (51) chacun adapté à réaliser une opération d'usinage associée à une même zone virtuelle donnée du modèle virtuel, la valeur préenregistrée de paramètre d'intensité d'usinage associée à ladite au moins une zone virtuelle donnée du modèle virtuel étant également associée à un outil réel donné (51) de ladite pluralité d'outils réels de manière que la valeur préenregistrée d'intensité d'usinage soit valable pour un couple constitué de ladite au moins une zone virtuelle donnée (Z1v) du modèle virtuel (4v) et de l'un des outils réels (51) portés par la machine-outil (50), la base de données (20) contenant pour une même zone virtuelle donnée (Z1v) du modèle virtuel (4v) une première valeur préenregistrée d'intensité d'usinage (Px) propre à l'un des outils réels (51) portés par la machine-outil (50) et une seconde valeur préenregistrée d'intensité d'usinage (Px) propre à un autre desdits outils réels portés par la machine-outil (50).

10. Procédé selon l'une quelconque des revendications 8 ou 9, dans lequel le modèle virtuel (4v) comporte plusieurs zones virtuelles (Z1v, Z2v) distinctes les unes des autres, le système de programmation étant adapté à :
- superposer, dans l'image affichée (5) et sur la représentation de la pièce réelle à usiner, chacune des zones virtuelles données (Z1v, Z2v) du modèle virtuel (4v) qui correspondent respectivement à des zones réelles données (Z1r, Z2r) de la pièce réelle à usiner (4r) ; et à
- indiquer des valeurs préenregistrées dans la base de données (20) des paramètres d'intensité d'usinage (Px) respectivement associées à chacune de ces zones virtuelles données affichées (Z1v, Z2v).

11. Procédé selon l'une quelconque des revendications 8 à 10, dans lequel le système de programmation (1) est agencé ;
- pour mémoriser dans la base de données (20), un historique des sélections successives effectuées pour générer, avec le module de programmation (3), des programmes d'usinage successifs de pièces réelles (4r) successivement usinées avec la machine-outil (50) ; et
- pour calculer des valeurs adaptées de paramètres d'intensité d'usinage (Px), chacune de ces valeurs adaptées étant associée à une zone virtuelle donnée du modèle virtuel qui lui correspond, chacune de ces valeurs adaptées étant calculée par le système de programmation (1) en fonction de l'historique des sélections.

12. Procédé selon la revendication 11, dans lequel le système de programmation est agencé pour que le calcul de chaque valeur adaptée de paramètre d'intensité d'usinage (Px) associée à une zone virtuelle donnée (Z1v) du modèle virtuel soit effectué en fonction de données issues d'une capture d'image de la zone réelle correspondante de la pièce à usiner.

13. Procédé selon la revendication 12, dans lequel le système de programmation (1) est agencé pour que le calcul de chaque valeur adaptée de paramètre d'intensité d'usinage (Px) associée à une zone virtuelle donnée (Z1v) du modèle virtuel (4v) soit effectué en fonction de données issues de captures d'images de zones réelles de pièces préalablement usinées par la machine-outil (50) qui correspondent à cette même zone virtuelle donnée (Z1v).

14. Procédé selon l'une quelconque des revendications 1 à 13, dans lequel l'interface de communication homme-machine (2) est fonctionnellement reliée à une instrumentation de mesure (52) équipant la machine-outil (50), l'instrumentation de mesure (52) étant agencée pour mesurer dans le temps, lors de l'usinage de la pièce réelle (4r), une variation des efforts appliqués par l'outil réel (51) sur la zone réelle de la pièce réelle (4r), le procédé comprenant la vérification que les efforts appliqués sur la zone réelle de la pièce réelle (4r) pendant l'usinage de la pièce réelle sont bien égaux, à une valeur de tolérance prédéfinie près, à ladite caractéristique d'intensité d'usinage à appliquer.

15. Procédé selon l'une quelconque des revendications 1 à 14, dans lequel le module de programmation (3) est agencé pour que le programme généré :
- commande l'usinage de plusieurs zones réelles distinctes de la pièce réelle qui correspondent chacune à une des zones virtuelles d'une pluralité de zones virtuelles distinctes du modèle virtuel prédéterminé (4v) qui ont été sélectionnées avec chacune un paramètre (Px) d'intensité d'usinage associé ; et
- interdise l'usinage de zones réelles de la pièce réelle qui correspondent à des zones virtuelles du modèle virtuel prédéterminé (4v) non sélectionnées parmi la pluralité de zones virtuelles distinctes du modèle virtuel prédéterminé (4v).

## Patentansprüche

1. Verfahren zur Erzeugung eines Bearbeitungsprogramms (P) mithilfe eines Programmierungssystems (1), wobei das Programmierungssystem (1) eine Schnittstelle Mensch-Maschine (2) und ein Programmierungsmodul (3) aufweist, wobei die Schnittstelle Mensch-Maschine (2) mindestens eine Anzeigefläche (2a) und Auswahlmittel, wobei das Verfahren Folgendes umfasst:
- die Anzeige auf der Anzeigefläche (2a) eines Bildes (5), das eine Darstellung von mindestens einem realen Werkstück (4r) und einem vordefinierten virtuellen Modell (4v) zeigt, wobei das vordefinierte virtuelle Modell dem genannten realen Werkstück (4r) entspricht und die Merkmale des realen Werkstücks definiert, die nach der Bearbeitung erreicht werden müssen;
- die Auswahl im Bild mittels der Auswahlmittel der Schnittstelle Mensch-Maschine, einerseits von mindestens einer vorgegebenen virtuellen Zone (Zlv) des vordefinierten virtuellen Modells (4v), die einer vorgegebenen realen Zone (Z1r) des realen Werkstücks (4r) entspricht, und andererseits die Auswahl eines Parameters (Px) der gewünschten Bearbeitungsintensität, der dieser mindestens ausgewählten virtuellen Zone zugeordnet ist; anschließend
- die Erzeugung durch das Programmierungsmodul (3) des Bearbeitungsprogramms (P), das zur Ausführung durch eine numerisch gesteuerte Werkzeugmaschine (50) geeignet ist, wobei das genannte Programm eine anzuwendende Charakteristik der Bearbeitungsintensität enthält, die mit einem realen Werkzeug (51), das von der Werkzeugmaschine (50) getragen wird, auf die reale zu bearbeitende Zone des realen Werkstücks angewendet wird, wobei die anzuwendende Charakteristik der Bearbeitungsintensität von dem genannten ausgewählten Parameter der Bearbeitungsintensität (Px) abhängt und aus einer aufzubringenden Kraft bei Anwendung des realen Werkzeugs auf die reale zu bearbeitende Zone, einer anzuwendenden Bearbeitungsdauer bei Einsatz des realen Werkzeugs auf die reale zu bearbeitende Zone oder einer Kombination aus dieser Kraft und dieser Dauer gewählt wird.

2. Verfahren zur Erzeugung eines Bearbeitungsprogramms nach Anspruch 1, wobei die genannte Fläche der Anzeige (2a), auf der das Bild angezeigt wird, eine Anzeigefläche einer Augmented-Reality-Schnittstelle ist, wobei die Augmented-Reality-Schnittstelle im angezeigten Bild das vordefinierte virtuelle Modell und die Darstellung des genannten realen Werkstücks (mindestens eines davon) überlagert.

3. Verfahren zur Erzeugung eines Bearbeitungsprogramms nach Anspruch 2, wobei das vordefinierte virtuelle Modell durch Projektion eines von mindestens einer gesteuerten Lichtquelle erzeugten optischen Signals auf die Anzeigefläche angezeigt wird.

4. Verfahren zur Erzeugung eines Bearbeitungsprogramms nach Anspruch 3, in dem die Darstellung des genannten realen Werkstücks (mindestens eines davon) durch Projektion eines optischen Signals auf die Anzeigefläche erzeugt wird, wobei das Signal aus einer Videoaufnahme des realen Werkstücks gewonnen wurde, die mit mindestens einem optischen Sensor durchgeführt wurde.

5. Verfahren zur Erzeugung eines Bearbeitungsprogramms nach einem der Ansprüche 2 oder 3, wobei die genannte Anzeigefläche transparent ist und sich die Darstellung des genannten realen Werkstücks (mindestens eines davon) im Bild aus der Beobachtung des realen Werkstücks durch die transparente Anzeigefläche ergibt.

6. Verfahren zur Erzeugung eines Bearbeitungsprogramms nach einem der Ansprüche 2 bis 5, wobei die Schnittstelle Mensch-Maschine (2) eine Kamera (2b) aufweist und das reale Werkstück (4r) auf einer Aufspannvorrichtung (40) befestigt ist, wobei eine Vielzahl realer visueller Markierungen (40a, 40b) auf mindestens einem der genannten Elemente, dem realen Werkstück (4r) oder der Aufspannvorrichtung (40), angebracht ist, wobei das virtuelle Modell eine Vielzahl von virtuellen visuellen Markierungen (40av, 40bv) aufweist, jede virtuelle visuelle Markierung einem der genannten realen visuellen Markierungen entspricht, und die Überlagerung des vordefinierten virtuellen Modells (4v) auf der Darstellung des realen Werkstücks (4r) im Bild dadurch erreicht wird, dass in von der Kamera (2b) erzeugten Bildern zumindest einige der realen visuellen Markierungen der Vielzahl realer visueller Markierungen (40a, 40b) erkannt werden und durch Anpassung der Orientierung und Skalierung des gesamten virtuellen Modells (4r) im Bild (5) die korrespondierenden virtuellen visuellen Markierungen (40av, 40bv) und realen visuellen Markierungen (40a, 40b) jeweils im angezeigten Bild (5) auf der Anzeigefläche (2a) überlagert werden.

7. Verfahren zur Erzeugung eines Bearbeitungsprogramms nach einem der Ansprüche 2 bis 5, wobei die Augmented-Reality-Schnittstelle eine Kamera (2b) aufweist, wobei die Schnittstelle Mensch-Maschine (2) so eingerichtet ist, dass sie in dem angezeigten Bild (5) die Überlagerung des vordefinierten virtuellen Modells (4v) auf der Darstellung des realen Werkstücks (4r) hervorbringt durch :
- Identifizierung in von der Kamera (2b) erzeugten Bildern visueller Übereinstimmungen zwischen Teilen der gegebenen realen Zone (Zlr) des zu bearbeitenden Werkstücks (4r) und Teilen der gegebenen virtuellen Zone (Zlv) des entsprechenden vordefinierten virtuellen Modells (4v) ; und durch
- Überlagerung, im angezeigten Bild (5), von Randbegrenzungen der gegebenen realen Zone (Zlr) auf die Randbegrenzungen der gegebenen virtuellen Zone (Z1v) des vordefinierten virtuellen Modells (4v).

8. Verfahren gemäß einem der Ansprüche 1 bis 7, wobei das Programmierungssystem eine Datenbank (20) aufweist, wobei die Schnittstelle Mensch-Maschine (2) so eingerichtet ist, in die Datenbank (20) für jede mindestens eine gegebene virtuelle Zone (Zlv) des vordefinierten virtuellen Modells (4v) einen vorgespeicherten Wert des Parameters der Bearbeitungsintensität (Px) einzutragen, wobei die Schnittstelle Mensch-Maschine (2) so eingerichtet ist, um:
- einerseits im angezeigten Bild (5) den genannten vorgespeicherten Wert des Parameters der Bearbeitungsintensität (Px) anzuzeigen; und zum
- andererseits, als Reaktion auf die Auswahl in dem Bild (5) des gewünschten Parameters der Bearbeitungsintensität (Px), der mit der mindestens einen ausgewählten virtuellen Zone verknüpft ist, in der Datenbank (20) einen neuen Wert des Parameters der Bearbeitungsintensität (Px) zu speichern, der dieser gegebenen virtuellen Zone (Zlv) zugeordnet ist

9. Verfahren nach Anspruch 8, wobei die Werkzeugmaschine (50) mehrere reale Werkzeuge (51) trägt, von denen jedes dazu geeignet ist, eine Bearbeitungsoperation auszuführen, die derselben gegebenen virtuellen Zone des vordefinierten virtuellen Modells (4v) zugeordnet ist, wobei der vorgespeicherte Wert des Parameters der Bearbeitungsintensität, der dieser genannten virtuellen Zone zugeordnet ist, zusätzlich einem bestimmten realen Werkzeug (51) der genannten Werkzeuggruppe zugeordnet ist, sodass der vorgespeicherte Wert der Bearbeitungsintensität für ein Paar gilt, das aus der genannten virtuellen Zone (Zlv) des vordefinierten virtuellen Modells (4v) und einem der von der Werkzeugmaschine (50) getragenen realen Werkzeuge (51) besteht; wobei die Datenbank (20) für ein und dieselbe gegebene virtuelle Zone (Zlv) des vordefinierten virtuellen Modells (4v) einen ersten vorgespeicherten Wert der Bearbeitungsintensität (Px), der einem der von der Werkzeugmaschine (50) getragenen realen Werkzeuge (51) eigen ist, und einen zweiten vorgespeicherten Wert der Bearbeitungsintensität (Px), der einem anderen der genannten realen Werkzeuge eigen ist, enthält.

10. Verfahren gemäß einem der Ansprüche 8 oder 9, wobei das vordefinierte virtuelle Modell (4v) mehrere voneinander verschiedene virtuelle Zonen (Z1v, Z2v) aufweist, wobei das Programmierungssystem dafür eingerichtet ist:
- Überlagern im angezeigten Bild (5) und auf der Darstellung des realen Werkstücks jeder der gegebenen virtuellen Zonen (Zlv, Z2v) des vordefinierten virtuellen Modells (4v), die jeweils den gegebenen realen Zonen (Zlr, Z2r) des realen Werkstücks (4r) entsprechen; und
- Angeben vorgespeicherter Werte in der Datenbank (20) der Parameter der Bearbeitungsintensität (Px), die jeweils jeder dieser angezeigten gegebenen virtuellen Zonen (Zlv, Z2v) zugeordnet sind.

11. Verfahren gemäß einem der Ansprüche 8 bis 10, wobei das Programmierungssystem (1) angeordnet ist;
- um in der Datenbank (20) eine Historie der sukzessiven Auswahlvorgänge zu speichern, die vorgenommen wurden, um zusammen mit dem Programmierungsmodul (3) sukzessive Bearbeitungsprogramme für reale Werkstücke (4r) zu erzeugen, die nacheinander mit der Werkzeugmaschine (50) bearbeitet werden; und - um angepasste Werte der Parameter der Bearbeitungsintensität (Px) zu berechnen, wobei jeder dieser angepassten Werte einer gegebenen virtuellen Zone des entsprechenden virtuellen Modells zugeordnet ist, wobei jeder dieser angepassten Werte vom Programmierungssystem (1) in Abhängigkeit von der Historie der Auswahlen berechnet wird.

12. Verfahren nach Anspruch 11, wobei das Programmierungssystem so eingerichtet ist, dass die Berechnung jedes an eine gegebene virtuelle Zone (Zlv) des virtuellen Modells gebundenen angepassten Wertes des Parameters der Bearbeitungsintensität (Px) auf der Grundlage von Daten aus einer Bildaufnahme der entsprechenden realen Zone des zu bearbeitenden Werkstücks durchgeführt wird.

13. Verfahren nach Anspruch 12, wobei das Programmierungssystem (1) so eingerichtet ist, dass die Berechnung jedes an eine gegebene virtuelle Zone (Zlv) des virtuellen Modells (4v) gebundenen angepassten Wertes des Parameters der Bearbeitungsintensität (Px) auf der Grundlage von Daten aus Bildaufnahmen realer Zonen von zuvor von der Werkzeugmaschine (50) bearbeiteten realen Werkstücken erfolgt, die dieser selben gegebenen virtuellen Zone (Zlv) entsprechen

14. Verfahren nach einem der Ansprüche 1 bis 13, wobei die Schnittstelle Mensch-Maschine (2) funktional mit einer Messeinrichtung (52) verbunden ist, die die Werkzeugmaschine (50) ausstattet, wobei die Messeinrichtung (52) so angeordnet ist, dass sie im Zeitverlauf während der Bearbeitung des realen Werkstücks (4r) eine Änderung der vom realen Werkzeug (51) auf die reale Zone des realen Werkstücks (4r) ausgeübten Kräfte misst, wobei das Verfahren die Überprüfung umfasst, dass die während der Bearbeitung des realen Werkstücks auf die reale Zone des realen Werkstücks (4r) ausgeübten Kräfte, bis auf einen vorgegebenen Toleranzwert, tatsächlich gleich der genannten anzuwendenden Charakteristik der Bearbeitungsintensität sind.

15. Verfahren nach einem der Ansprüche 1 bis 14, wobei das Programmierungsmodul (3) so eingerichtet ist, dass das erzeugte Programm:
- steuert die Bearbeitung mehrerer voneinander unterschiedlicher realer Zonen des realen Werkstücks, die jeweils einer der virtuellen Zonen einer Vielzahl voneinander unterschiedlicher virtueller Zonen des vordefinierten virtuellen Modells (4v) entsprechen, die jeweils mit einem zugeordneten Parameter (Px) der Bearbeitungsintensität ausgewählt wurden; und
- untersagt die Bearbeitung realer Zonen des realen Werkstücks, die virtuellen Zonen des vordefinierten virtuellen Modells (4v) entsprechen und nicht aus der Vielzahl voneinander unterschiedlicher virtueller Zonen des vordefinierten virtuellen Modells (4v) ausgewählt wurden.

## Claims

1. Method of generating a machining program (P) using a programming system (1), the programming system (1) comprising a human-machine communication interface (2) and a programming module (3), the human-machine communication interface (2) comprising at least one display surface (2a) and selection means, the method comprising:
- displaying on the display surface (2a) an image (5) illustrating a representation of at least one real workpiece to be machined (4r) and a predetermined virtual model (4v) corresponding to said at least one real workpiece to be machined (4r) and defining the characteristics of the real workpiece that are to be obtained after its machining;
- selecting in the image, by means of the selection means of the human-machine communication interface, on the one hand at least one given virtual zone (Zlv) of the predetermined virtual model (4v) corresponding to a given real zone (Z1r) of the real workpiece to be machined (4r) and on the other hand a desired machining intensity parameter (Px) associated with said at least one selected virtual zone; then
- generating, by the programming module (3), the machining program (P) adapted to be executed by a numerically-controlled machine tool (50), said program containing a machining intensity characteristic to be applied, with a real tool (51) carried by the machine tool (50), on the real zone to be machined of the real workpiece, the machining intensity characteristic to be applied being dependent on said selected machining intensity parameter and chosen from a machining force to be applied with the real tool against the real zone to be machined, a machining duration to be applied with the real tool against the real zone to be machined, or a combination of said force and said duration.

2. Method of generating a machining program according to claim 1, in which said display surface (2a) on which the image is displayed is a display surface of an augmented reality interface, the augmented reality interface superimposing, in the displayed image, the predetermined virtual model and the representation of said at least one real workpiece to be machined.

3. Method of generating a machining program according to claim 2, in which the predetermined virtual model is displayed by projection, onto the display surface, of an optical signal generated by at least one controlled light source.

4. Method of generating a machining program according to claim 3, in which the representation of said at least one real workpiece to be machined is displayed by projection, onto the display surface, of an optical signal generated from a video capture of the real workpiece to be machined carried out using at least one optical sensor.

5. Method of generating a machining program according to any one of claims 2 or 3, in which said display surface is transparent, the representation of said at least one real workpiece to be machined in the image resulting from the observation of the real workpiece to be machined through the transparent display surface.

6. Method of generating a machining program according to any one of claims 2 to 5, in which the human-machine communication interface (2) comprises a camera (2b) and the real workpiece (4r) is fixed on a machining fixture (40), a plurality of real visual markers (40a, 40b) being formed on at least one of the real workpiece (4r) and the machining fixture (40), the virtual model comprising a plurality of virtual visual markers (40av, 40bv), each virtual visual marker corresponding to one of said real visual markers, the superposition in the image of the predetermined virtual model (4v) onto the representation of the real workpiece to be machined (4r) being obtained by recognition in images generated by the camera (2b) of at least some of the real visual markers of the plurality of real visual markers (40a, 40b) and by adjusting orientation and scale of the whole virtual model (4r) in the image (5) so that the corresponding virtual visual markers (40av, 40bv) and real visual markers (40a, 40b) are respectively superimposed in the displayed image (5) on the display surface (2a).

7. Method of generating a machining program according to any one of claims 2 to 5, in which the augmented reality interface comprises a camera (2b), the human-machine communication interface (2) being arranged to perform the superposition, in the displayed image (5), of the predetermined virtual model (4v) on the representation of the real workpiece to be machined (4r) by:
- identification, in images generated by the camera (2b), of visual correspondences between parts of the given real zone (Zlr) of the real workpiece to be machined (4r) and parts of the given virtual zone (Zlv) of the corresponding virtual model (4v); and by
- superimposing, in the displayed image (5), peripheral boundaries of the given real zone (Zlr) onto peripheral boundaries of the given virtual zone (Zlv) of the virtual model (4v).

8. Method according to any one of claims 1 to 7, wherein the programming system comprises a database (20), the human-machine communication interface (2) being arranged to record in the database (20), for each at least one given virtual zone (Zlv) of the virtual model (4v), a pre-registered value of the machining intensity parameter (Px) associated with that given virtual zone (Zlv) of the virtual model, the human-machine communication interface (2) being arranged to:
- on the one hand indicate in the displayed image (5) said pre-registered value of the machining intensity parameter (Px) associated with that given virtual zone (Zlv); and to
- on the other hand, in response to the selection in the image (5) of the desired machining intensity parameter (Px) associated with said at least one selected virtual zone, record in the database (20) a new value of the machining intensity parameter (Px) associated with that given virtual zone (Zlv)

9. Method according to claim 8, wherein the machine tool (50) carries a plurality of real tools (51), each adapted to perform a machining operation associated with the same given virtual zone of the virtual model, the pre-registered value of the machining intensity parameter associated with said at least one given virtual zone of the virtual model being also associated with a given real tool (51) of said plurality of real tools so that the pre-registered machining intensity value applies to the pair formed by said at least one given virtual zone (Zlv) of the virtual model (4v) and one of the real tools (51) carried by the machine tool (50), the database (20) containing, for the same given virtual zone (Zlv) of the virtual model (4v), a first pre-registered machining intensity value (Px) specific to one of the real tools (51) carried by the machine tool (50) and a second pre-registered machining intensity value (Px) specific to another of said real tools carried by the machine tool (50).

10. Method according to any one of claims 8 or 9, wherein the virtual model (4v) comprises several virtual zones (Zlv, Z2v) distinct from each other, the programming system being adapted to:
- superimpose, in the displayed image (5) and on the representation of the real workpiece to be machined, each of the given virtual zones (Zlv, Z2v) of the virtual model (4v) that correspond respectively to given real zones (Zlr, Z2r) of the real workpiece (4r); and to
- to record pre-registered values in the database (20) of the machining intensity parameters (Px) respectively associated with each of these displayed given virtual zones (Zlv, Z2v).

11. Method according to any one of claims 8 to 10 in which the programming system (1) is arranged to:
- to store in the database (20) a history of successive selections made to generate, with the programming module (3), successive machining programs for real workpieces (4r) successively machined with the machine tool (50); and - to calculate adapted values of machining intensity parameters (Px), each of these adapted values being associated with a given virtual zone of the corresponding virtual model, each of these adapted values being calculated by the programming system (1) as a function of the history of selections.

12. Method according to claim 11 in which the programming system is arranged so that the calculation of each adapted value of machining intensity parameter (Px) associated with a given virtual zone (Zlv) of the virtual model is performed based on data from an image capture of the corresponding real zone of the workpiece to be machined.

13. Method according to claim 12, in which the programming system (1) is arranged so that the calculation of each adapted value of machining intensity parameter (Px) associated with a given virtual zone (Zlv) of the predetermined virtual model (4v) is performed based on data from image captures of real zones of workpieces previously machined by the machine tool (50) that correspond to that same given virtual zone (Zlv).

14. Method according to any one of claims 1 to 13, wherein the human-machine communication interface (2) is functionally connected to measuring instrumentation (52) fitted to the machine tool (50), the measuring instrumentation (52) being arranged to measure over time, during machining of the real workpiece (4r), a variation of the forces applied by the real tool (51) on the real zone of the real workpiece (4r), the method comprising verifying that the forces applied to the real zone of the real workpiece (4r) during machining of the real workpiece are equal, within a predefined tolerance value, to said machining intensity characteristic to be applied.

15. Method according to any one of claims 1 to 14, in which the programming module (3) is arranged so that the generated program:
- commands the machining of multiple distinct real zones of the real workpiece, each corresponding to one of the virtual zones in a plurality of distinct virtual zones of the predetermined virtual model (4v) that have been selected, each being associated with a machining intensity parameter (Px); and
- prohibits the machining of real zones of the real workpiece that correspond to virtual zones of the predetermined virtual model (4v) not selected from the plurality of distinct virtual zones of the predetermined virtual model (4v).
